# EUROPÄISCHE PATENTSCHRIFT

(11) **EP 0 607 616 B1**
(45) Veröffentlichungstag und Bekanntmachung des Hinweises auf die Patenterteilung: **09.10.1996**
(21) Anmeldenummer: 93121045.4
(22) Anmeldetag: 29.12.1993
(51) Int. Cl.: E04F 15/20, B32B 5/18

(54) **Isolierungsplatte**
Insulation plate
Plaque d'isolation

(30) Priorität: 20.01.1993 DE 9300670 U
(43) Veröffentlichungstag der Anmeldung: 27.07.1994
(73) Patentinhaber: Rolltec-Heizsysteme Vertriebsgesellschaft mit beschränkter Haftung, D-48282 Emsdetten (DE)
(72) Erfinder: Ruyling, Uwe, D-48341 Altenberge (DE)
(74) Vertreter: Habbel, Hans-Georg, Dipl.-Ing.

(56) Entgegenhaltungen:
- EP-A- 0 501 838
- DE-A- 2 014 359
- DE-A- 3 939 183
- DE-A- 4 038 670
- GB-A- 1 367 144

## Beschreibung

Die Erfindung betrifft eine Isolierungsplatte nach dem Oberbegriff des Anspruches 1.

Derartige Isolierungsplatten werden insbesondere bei der Verlegung von Fußbodenheizungen verwendet, um die Heizschlangen gegenüber dem Untergrund thermisch zu isolieren und um eine Feuchtigkeitssperre gegenüber dem Untergrund zu schaffen. Zu diesem Zweck werden üblicherweise Isolierungsplatten verwendet, bei denen auf eine Hartschaumplatte eine Folie aufkaschiert ist. Auf derartige Isolierungsplatten können die Heizungsschlangen der Fußbodenheizung aufgelegt werden, wobei sie anschließend mit im wesentlichen U-förmigen Bügeln auf den Isolierungsplatten befestigt werden. Zu diesem Zweck dringen mit Widerhaken versehene Enden der Bügel durch die Sperrschicht, die ein Widerlager für die Widerhaken bildet.

Die Sperrschichten bestehen aus einem gegenüber der Dämmschicht unterschiedlichen Material, wobei als drittes Element einer Isolierungsplatte der Klebstoff hinzukommt, mit dem die Sperrschicht auf die Dämmschicht aufkaschiert ist. Die bei Kunststoffen ohnehin schwierige Wiederverwertung scheitert bei den bekannten Isolierungsplatten daran, daß unterschiedliche Materialien für eine derartige Isolierungsplatte verwendet werden. Die Versuche, eine bekannte Isolierungsplatte in ihre einzelnen Komponenten zu trennen, scheitert daran, daß stets an der Dämmschicht, die das größte Volumen einer derartigen Platte ausmacht, Kleberreste verbleiben.

Aus der DE 39 39 183 A1 ist eine Isolierschaumplatte bekannt, bei der die eigentliche Dämmschicht durch Polystyrol-Kunststoffschaum gebildet wird, der leistenförmig geschnitten ist und mit einer flexiblen Trägerbahn verbunden ist, so daß insgesamt der Isolierbelag aufgerollt werden kann. Dabei soll die flexible Trägerbahn aus einem wasserunempfindlichen dampfdurchlässigen Vliesstoff bestehen.

Aus der DE-A-2 014 359 ist ein Verfahren zum Befestigen und/oder Armieren von Gegenständen und Teilen beliebiger Formen bekannt, bei dem Schaumstoffgegenstände unter Druck und Wärme mit Armierungsschichten verschweißt werden. Diese Armierungsschichten können kunststoffgetränkte Fasermatten umfassen oder durch entsprechend dicke Kunststoffbahnen gebildet sein. Auch bei Ausbildung derartiger Gegenstände als Platten eignen sich diese nicht als Isolierungsplatten für Fußbodenheizungen, da sie aufgrund der Festigkeit der Armierungsschicht die eingangs erwähnte Befestigung der Heizungsschlangen nicht ermöglichen.

Aus dem DE-GM 80 11 335 U1 ist eine rollbare Belagbahn zur Wärmedämmung bekannt, die, um rollbar ausgebildet zu sein, ebenfalls senkrecht zur Rollrichtung verlaufende Segmente aufweist, die mit einer Folienbahn verbunden sind. Bei dieser rollbaren Belagbahn steht die Ausbildung und der Verlauf der Schnittkanten der einzelnen Segmente im Vordergrund, um eine möglichst optimale Trittschall- und Wärmeisolierung zu ermöglichen.

Aus dem DE-GM 81 37 902 U1 ist eine Isolierungsbahn bekannt, die ebenfalls aus einer eingeschnittenen, also in Segmente unterteilten Polystyrolbahn besteht, auf deren Oberfläche eine Kunststoffolie oder Teerpappe als Kaschierung aufgebracht ist.

Auch diese drei druckschriftlich bekannten Isolierungsplatten weisen daher für ihre Wiederverwertung die genannten Probleme auf.

Der Erfindung liegt die Aufgabe zugrunde, eine gattungsgemäße Isolierungsplatte dahingehend zu verbessern, daß sie problemlos wiederverwertet bzw. für eine Wiederverwertung aufgearbeitet werden kann.

Diese der Erfindung zugrundeliegende Aufgabe wird durch die Ausbildung gemäß den kennzeichnenden Merkmalen des Anspruches 1 gelöst.

Die Erfindung schlägt mit anderen Worten vor, sowohl für die Dämmschicht als auch für die Sperrschicht als auch für den Klebstoff zwischen Sperr- und Dämmschicht Polystyrol zu verwenden. Die Dämmschicht wird vorteilhaft aus aufgeschäumtem Polystyrol gebildet, während die Feuchtigkeitssperre durch eine Polystyrolfolie gebildet werden kann. Ein polystyrolhaltiger Kleber verbindet Sperr- und Dämmschicht miteinander, so daß zwar unterschiedlich erscheinende Materialien in der erfindungsgemäßen Isolierungsplatte zusammengefaßt sind, die jedoch alle aus dem chemisch gleichen Stoff bestehen. Hierdurch ist einerseits eine problemlose Wiederverarbeitung der gesamten Isolierungsplatte möglich, wenn diese beispielsweise vorher durch einen Schredder oder eine ähnliche Zerkleinerungseinrichtung geführt wird und anschließend aufgeschmolzen oder aufgelöst wird.

Andererseits ist es möglich, die unterschiedlichen Erscheinungsformen des Polystyrols zu trennen, beispielsweise die Polystyrolfolie mit einem höheren spezifischen Gewicht von der Dämmschicht zu trennen, welche ein geringeres spezifisches Gewicht aufweist. Dabei an der Folie anhaftende Verunreinigungen können allenfalls aus dem polystyrolhaltigen Klebstoff oder aus dem Polystyrolschaum der Dämmschicht bestehen, so daß die Wiederverwertbarkeit der Folie nicht in Frage gestellt wird. Umgekehrt kann der wiederaufzuarbeitende Polystyrolschaum allenfalls Kleberreste des polystyrolhaltigen Klebers aufweisen, wodurch auch die Weiterverarbeitung und Wiederaufbereitung des Polystyrolschaums nicht beeinträchtigt wird.

Vorteilhaft kann eine erfindungsgemäße Isolierungsplatte dadurch gebildet sein, daß eine vergleichsweise große Sperrschicht verwendet wird, mit der eine Vielzahl von Riegeln oder Platten verklebt ist, die die Dämmschicht bilden. Die Riegel oder Platten der Dämmschicht sind untereinander nicht verbunden, so daß sich insgesamt eine aufrollbare Isolierungsplatte ergibt, die auseinandergerollt und plan ausgerichtet eine durchgehende Dämmschicht aufweist, bei der die einzelnen Riegel oder Platten aneinander angrenzen.

Durch diese Ausbildung wird einerseits der Transport und die Handhabung einer Isolierungsplatte erleichtert, die ausgerollt eine sehr große Länge aufweisen kann. Weiterhin wird hierdurch die Möglichkeit geschaffen, handhabbare Platten von einer Länge zu schaffen, die sich von einer Wand bis zur nächsten Wand eines Raumes erstrecken können, so daß im Vergleich zu einzelnen diskreten Isolierungsplatten eine starke Reduzierung der Trennfugen verschiedener Platten bewirkt wird, die zum Feuchtigkeitsschutz abgedichtet werden müssen. Es wird daher eine sehr schnelle Verlegung der Isolierungsplatten ermöglicht, da die gegeneinander abzudichtenden Fugen minimiert werden.

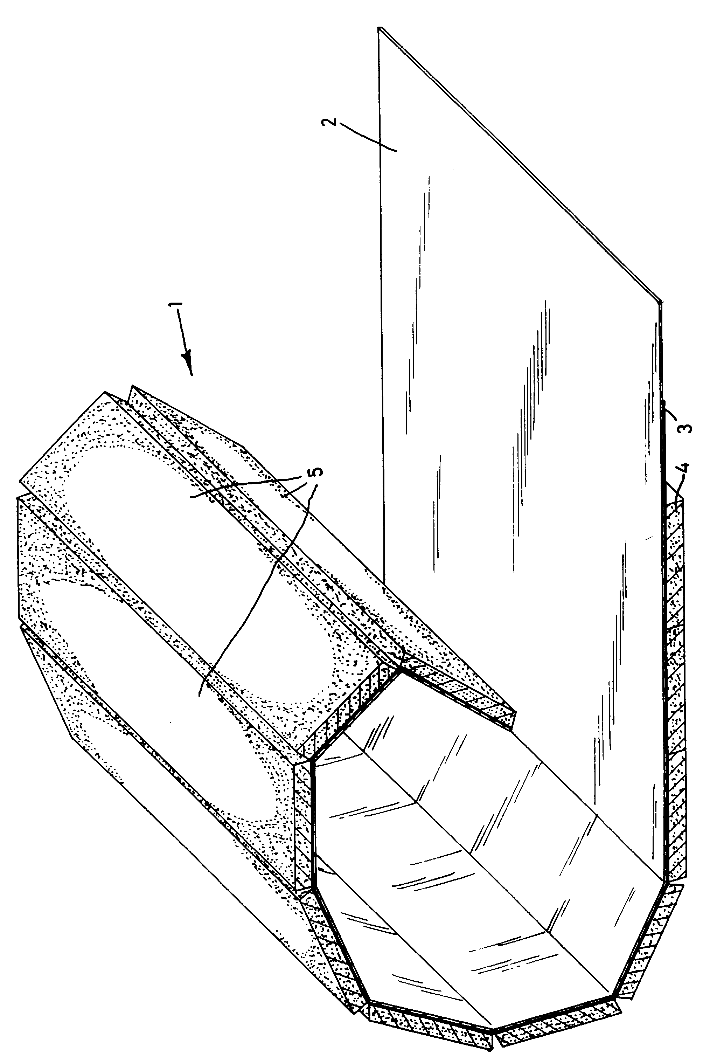

Die Erfindung wird anhand der Zeichnung im folgenden näher erläutert.

Dabei ist mit 1 eine erfindungsgemäße Isolierungsplatte dargestellt, die teilweise aufgerollt und teilweise plan ausgerichtet ist. Die Isolierungsplatte 1 weist eine obere Sperrschicht 2 auf, welche aus einer Polystyrolfolie gebildet ist. Die Sperrschicht 2 ist mit Hilfe eines Klebers 3, der schichtartig auf die Sperrschicht 2 aufgetragen ist, mit einer Dämmschicht 4 verklebt, wobei die Dämmschicht 4 aus geschäumtem Polystyrol besteht und der Kleber 3 ebenfalls auf Polystyrolbasis hergestellt ist.

Die Dämmschicht 4 wird aus einer Vielzahl einzelner Platten oder Riegel 5 gebildet, die jeweils mit der Sperrschicht 2 verklebt sind, untereinander aber nicht verbunden sind. Erst bei einer planen Ausrichtung der Isolierungsplatte 1 ergibt sich eine durchgehende Dämmschicht 4, bei der die einzelnen Riegel 5 aneinander angrenzen.

## Patentansprüche

1. Isolierungsplatte für Fußbodenheizungen, mit einer Dämmschicht zur thermischen Isolierung sowie einer Sperrschicht, die feuchtigkeitsundurchlässig ist, wobei die Sperrschicht mit der Dämmschicht verbunden ist und wobei die Dämmschicht aus Polystyrol, insbesondere aus geschäumtem Polystyrol besteht, dadurch gekennzeichnet, daß die Sperrschicht (2) von einer Polystyrolfolie gebildet ist und mittels eines Klebers (3) auf Polystyrolbasis mit der Dämmschicht (4) verklebt ist.

2. Isolierungsplatte nach Anspruch 1, dadurch gekennzeichnet, daß die Dämmschicht (4) aus einer Vielzahl einzelner Riegel oder Platten (5) besteht, die jeweils mit der Sperrschicht (2) verklebt, voneinander jedoch getrennt sind, wobei die einzelnen Riegel oder Platten (5) bei plan ausgerichteter Isolierplatte (1) aneinandergrenzen.

## Claims

1. An insulating sheet for floor heating, comprising an insulating layer for thermal insulation and a barrier layer which is impermeable to moisture, the barrier layer being connected with the insulating layer and the insulating layer consisting of polystyrene, especially foamed polystyrene, characterised in that the barrier layer (2) is made of a polystyrene film and adhered to the insulating layer (4) by means of an adhesive (3) with a polystyrene base.

2. An insulating sheet according to claim 1, characterised in that the insulating layer (4) consists of a plurality of individual bars or sheets (5) which are each adhered to the barrier layer (2) but are separate from each other, the individual bars or sheets (5) adjoining each other when the insulating sheet (1) is in planar orientation.

## Revendications

1. Plaque d'isolation pour chauffages au sol, avec une couche isolante pour l'isolation thermique ainsi qu'une couche de barrage d'humidité qui est imperméable à l'humidité, dans laquelle la couche de barrage d'humidité est reliée à la couche isolante, qui se compose de polystyrène, en particulier de polystyrène moussé, caractérisée en ce que la couche de barrage d'humidité (2) est formée d'une feuille de polystyrène et est collée à la couche isolante (4) au moyen d'un agent adhésif (3) à base de polystyrène.

2. Plaque d'isolation selon la revendication 1, caractérisée en ce que la couche isolante (4) se compose d'une pluralité de barres ou de plaques (5) individuelles, qui sont collées respectivement à la couche de barrage de l'humidité (2), mais qui sont séparées les unes des autres, dans laquelle les barres ou plaques (5) individuelles sont limitées les unes des autres par une plaque d'isolation (1) orientée dans le plan.
